# EUROPEAN PATENT APPLICATION

(11) **EP 4 649 861 A1**
(43) Date of publication of application: **19.11.2025**
(21) Application number: 24189494.8
(22) Date of filing: 18.07.2024
(51) Int. Cl.: A46B 11/06, A01K 63/10

(54) **WATER EXCHANGER**

(30) Priority: 17.05.2024 CN 202410616603
(71) Applicant: Tai'an Yunkai Aquarium Equipment Co., Ltd., Tai'an City Shandong (CN)
(72) Inventor: Zhang, Xiaohui, Tai'an City, Shandong Province (CN); Xia, Jichao, Tai'an City, Shandong Province (CN); Zhang, Xiaoli, Tai'an City, Shandong Province (CN)
(74) Representative: Díaz de Bustamante y Terminel, Isidro

(57) **Abstract**

The invention relates to the field of fish tank cleaning, in particular discloses a water exchanger. The water exchanger comprises a pressing balloon, a switch valve, a communicating pipe, a connecting pipe, a cleaning brush head and a water outlet joint. The cleaning brush head is equipped with multiple cleaning bristles and water inlet holes. Through the invention, the user can use one hand to press the pressing balloon to absorb water and rotate the switch valve to adjust the size of the water outlet channel and control the water flow rate. The user can use his spare hand to assist with water absorption or handle emergencies. Therefore, the use of the invention is more flexible and convenient.

## Description

### Technical Field

The invention relates to the field of fish tank cleaning, in particular to a water exchanger.

### Background Art

Due to the influence of dust in air, microorganisms, bait residues and metabolic excreta, the water in fish tanks is easily contaminated. Therefore, people need to regularly clean up the residues in fish tanks and replace the water regularly.

Generally speaking, users clean their fish tanks by water exchange cleaner. However, the operation of the existing water exchanger in fish tanks is quite cumbersome and requires the cooperation of both hands. Therefore, it cannot flexibly cope with sudden situations. For example, when the water inlet holes is blocked by foreign objects, it needs to pause the water change and first clean the foreign objects by hand, which is time-consuming and laborious, and inconvenient to operate.

### Content of Invention

The invention aims to provide a water exchanger that integrates a balloon with a switch valve to achieve water absorption by pressing the balloon with one hand. At the same time, this hand can also rotate the switch valve to adjust the size of the water outlet channel, thereby controlling the flow rate of discharged water. Therefore, the user's other hand can assist in water absorption or handling emergencies, making use more flexible and convenient.

To achieve the above purpose, the technical solution of the invention is as follows:
A water exchanger, comprising a pressing balloon, a switch valve, a communicating pipe, a connecting pipe, a cleaning brush head and a water outlet joint. The pressing balloon is connected to the top of the switch valve, and the communicating pipe is an L-shaped three-way pipe. The switch valve rotates and is set at the top of the communicating pipe, and the connecting pipe is connected to the bottom of the communicating pipe. The cleaning brush head is set at the bottom of the connecting pipe, and one side of the communicating pipe is connected to the water outlet joint. The cleaning brush head is equipped with multiple cleaning bristles and water inlet holes, and the end of the water outlet joint far from the communicating pipe is connected to a hose.

Furthermore, the switch valve comprises a rotating handle, which is rotatably connected to the communicating pipe. The bottom of the rotating handle is equipped with a water control joint located inside the communicating pipe.

Furthermore, the water control joint is a single hole joint or a double hole joint.

Furthermore, the water control joint comprises a water blocking end and a water circulating end.

Furthermore, the connecting pipe is an expansion pipe, and a fixing nut is threaded on the connecting pipe. The expansion and fixation of the connecting pipe are achieved by turning the fixing nut.

Furthermore, a fixing clip is provided on the outer side of the communicating pipe, and the fixing clip is threaded with a fastening bolt.

Furthermore, the connecting pipe is connected to the bottom of the communicating pipe through a first one-way valve, and one side of the communicating pipe is connected to the water outlet joint through a second one-way valve.

Furthermore, the pressing balloon and the rotating handle, the rotating handle and the water passage pipe, and the connecting pipe and the water passage pipe are all sealed by the sealing rings.

Compared to the prior art, the advantages of the invention are as follows:
In the invention, the pressing balloon, the switch valve and the connecting pipe are integrated into one through the communicating pipe. When changing water, the user can adjust the swtich valve to the water supply state, press the pressing balloon, and then during the process of restoring the pressing balloon to its original state, a negative pressure is formed in the communicating pipe, causing the water in the fish tank to be sucked into the communicating pipe through the water inlet holes and ultimately flow out of the hose, achieving water change in the fish tank. Therefore, the user can use one hand to press the pressing balloon to absorb water, while leaving the other hand to assist in absorbing water or handling emergencies. At the same time, by rotating the switch valve to adjust the size of the water outlet channel, the invention can control the flow rate of the discharged water, making it more flexible and convenient to use.

### Description of Drawings

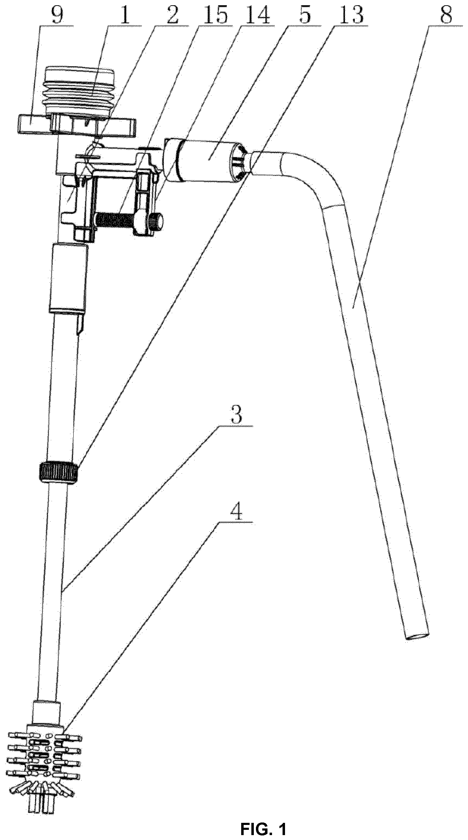

Figure 1 is a schematic diagram of the structure of the invention.

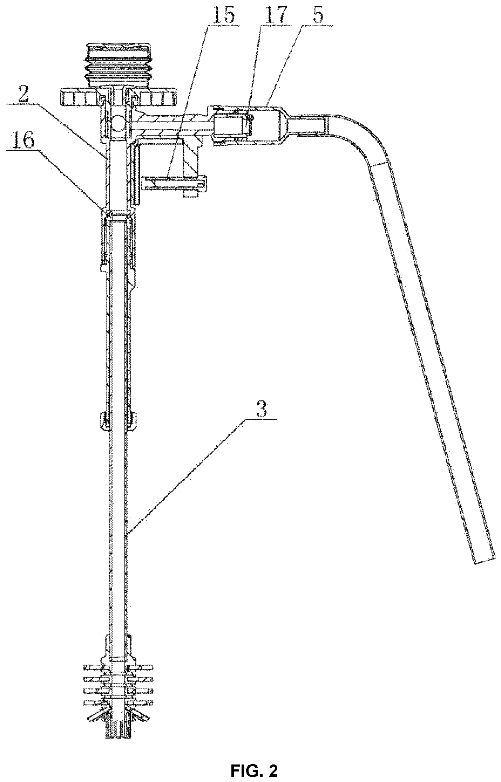

Figure 2 is a sectional view of the main view structure of the invention.
Figure 3 is a schematic diagram of the switch valve structure of a single hole joint of the invention.
Figure 4 is a schematic diagram of the switch valve structure of the double hole joint of the invention.

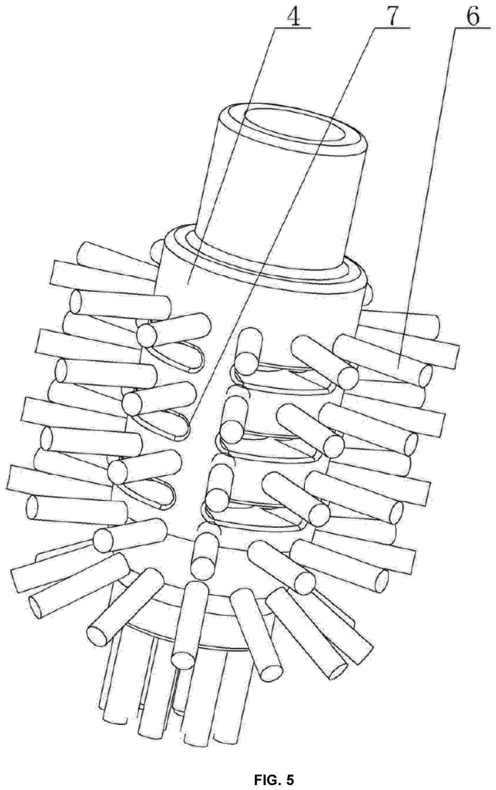

Figure 5 is a schematic diagram of the structure of the cleaning brush head of the invention.

### Meanings of numbers in the figures:

1. Pressing balloon; 2. Communicating pipe; 3. Connecting pipe; 4. Cleaning brush head; 5. Water outlet joint; 6. Cleaning bristles; 7. Water inlet holes ; 8. Flexible hose; 9. Rotating handle; 10. Water control joint; 11. Water blocking end; 12. Water circulating end; 13. Fixing nut; 14. Fixing clip; 15. Tightening bolt; 16. First one-way valve; 17. Second one-way valve.

### Description of Preferred Embodiments

The invention is further elaborated through the following specific embodiments.

The invention provides a water exchanger, whose main structure comprises a pressing balloon 1, a switch valve, a communicating pipe2, a connecting pipe 3, a cleaning brush head 4 and a water outlet joint 5. The pressing balloon 1 is connected to the top of the switch valve, and the communicating pipe 2 is an L-shaped three-way pipe. The switch valve rotates and is set at the top of the communicating pipe 2, and the internal continuity of the communicating pipe 2 is adjusted by rotating the switch valve. After the pressing balloon 1 returns to its original state, negative pressure is formed inside the communicating pipe 2. The connecting pipe 3 is connected to the bottom of the communicating pipe 2, and the cleaning brush head 4 is set at the bottom of the connecting pipe 3. One side of the communicating pipe 2 is connected to the water outlet joint 5. The cleaning brush head 4 is equipped with multiple cleaning bristles 6 and water inlet holes 7, and the end of the water outlet joint 5 far away from the communicating pipe 2 is connected to a hose 8, which sucks the water in the fish tank into the communicating pipe 2 through the water inlet holes 7, and then the water flows out from the hose 8 through the water outlet joint 5, achieving water exchange inside the fish tank.

Preferably, the switch valve comprises a rotating handle 9 which is sealed and inserted with the pressing balloon 1 for easy disassembly, replacement and maintenance. The rotating handle 9 is rotatably connected to the communicating pipe 2, and the bottom of the rotating handle 9 is equipped with a water control joint 10 located inside the communicating pipe 2. Turning the rotating handle 9 can drive the water control joint 10 to rotate and adjust the opening and closing of the communicating pipe 2, thereby starting or stopping the discharge process.

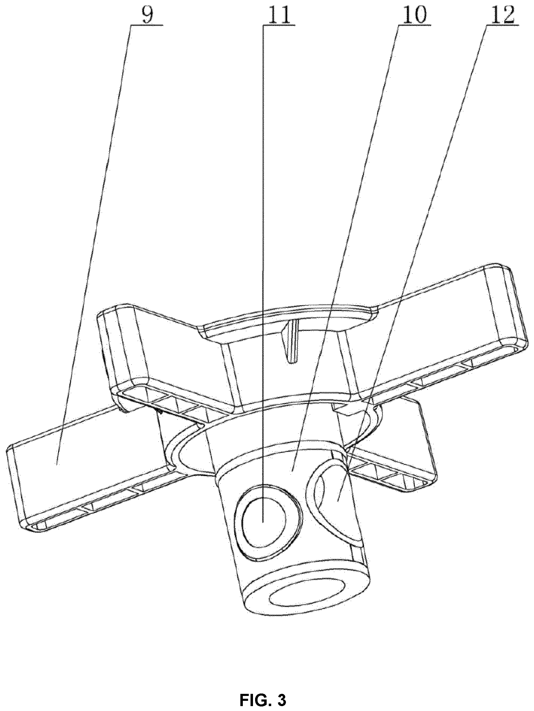

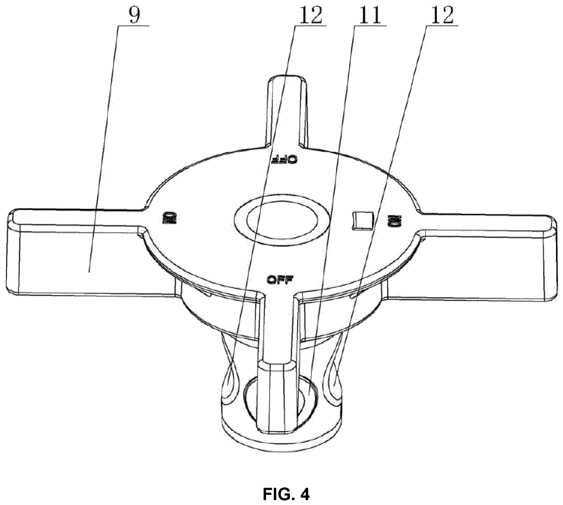

As shown in Figures 3 and 4, preferably, the water control joint 10 is a single hole joint or a double hole joint.

Preferably, the water control joint 10 comprises a water blocking end 11 and a water circulating end 12 (the water circulating end 12 is the hole through which water flows). When the water control joint 10 is rotated and the water blocking end 11 is rotated to the horizontal inlet position of the communicating pipe 2, the water flow is blocked, thereby adjusting the internal continuity of the communicating pipe 2 and starting or stopping the discharge process.

For specific implementation, when the water control joint 10 is a single hole type, turning the rotating handle 9 at 90 °, 180 ° or 270 ° can close the device and stop the drainage process; When the water control joint 10 is a double hole type, turning the rotating handle 9 at 90 ° can start the drainage process, and then turning the rotating handle at 90 ° can stop the drainage process.

Preferably, the connecting pipe 3 is an expansion pipe, and a fixing nut 13 is threaded on the connecting pipe 3. The expansion and fixation of the connecting pipe 3 can be achieved by turning the fixing nut 13. The connecting pipe 3 can be adjusted for expansion and contraction according to the position to be cleaned inside the fish tank, making it more flexible to use and easier to clean.

Preferably, the outer side of the communicating pipe 2 is equipped with a fixing clip14, which is threaded with a fastening bolt 15. The communicating pipe 2 is clamped onto the fish tank glass through the fixing clip 14 and fixed by the fastening bolt 15. Thus, the device can be fixed on the fish tank, making it easier to change water in the fish tank.

Preferably, the connecting pipe 3 is connected to the bottom of the communicating pipe 2 through a first one-way valve 16. The first one-way valve 16 only allows the medium to flow from the connecting pipe 3 to the communicating pipe 2, and one side of the communicating pipe 2 is connected to the water outlet joint 5 through the second one-way valve 17. The second one-way valve 17 only allows the medium to flow from the communicating pipe 2 to the water outlet joint 5, preventing water from flowing back into the fish tank.

Preferably, the pressing balloon 1 and the rotating handle 9, the rotating handle 9 and the communicating pipe 2, and the connecting pipe 3 and the communicating pipe 2 are all sealed through the sealing rings to ensure the sealing between the components, prevent water and gas leakage, and ensure sufficient negative pressure in the communicating pipe 2.

Working principle: When a water change operation is required, adjust the rotating handle 9 to rotate the water circulating end 12 of the water control joint 10 to the horizontal water inlet holes position of the communicating pipe 2, which is in the water circulating state. Press the pressing balloon 1 to deform. Due to the limitation of the first one-way valve 16, the air inside the communicating pipe 2 can only flow out from the water outlet joint 5. Then, press the pressing balloon 1 to restore its original shape, and the second one-way valve 17 closes. When the second one-way valve 17 prevents air from entering from the water outlet joint 5, negative pressure is formed inside the communicating pipe 2. At this negative pressure state, only the first one-way valve 16 can be opened, and the water in the fish tank can be sucked into the communicating pipe 2. After pressing the pressing balloon 1 again, with the cooperation of the first one-way valve 16 and the second one-way valve 17, the water in communicating pipe 2 flows out through the outlet connector 5 to be discharged. In addition, since water is liquid and has a certain fluidity, after the above operation, when the water surface of the fish tank is higher than the outlet at the end of hose 8, the water flows downwards under the action of gravity. At this point, operating the rotating handle 9 can control the water flow rate, thereby achieving water change in the fish tank. When the drainage process needs to be stopped, the position of the water circulating end 12 of the water control joint 10 can also be controlled by rotating the handle 9 to stop the drainage.

While using one hand to press the pressing balloon to absorb water, the user can also rotate the switch valve to adjust the size of the water outlet channel to control the flow rate of discharged water, which allows the user to have the other hand available to assist with water absorption or handle emergencies. Moreover, the user can adjust the size of the water outlet channel by turning the switch valve, thereby controlling the discharged water flow rate, making it more flexible and convenient to use.

## Claims

1. A water exchanger, **characterized by** comprising a pressing balloon (1), a switch valve, a communicating pipe(2), a connecting pipe (3), a cleaning brush head (4) and a water outlet joint (5). The pressing balloon (1) is connected to the top of the switch valve, and the communicating pipe(2) is an L-shaped three-way pipe. The switch valve rotates and is set at the top of the communicating pipe(2). The connecting pipe (3) is connected to the bottom of the communicating pipe(2), and the cleaning brush head (4) is set at the bottom of the connecting pipe (3). One side of the communicating pipe(2) is connected to the water outlet joint (5). The cleaning brush head (4) is equipped with multiple cleaning bristles (6) and water inlet holes (7), the end of the water outlet joint (5) far away from the communicating pipe(2) is connected to a hose (8).

2. The water exchanger according to claim 1, **characterized in that** the switch valve comprises a rotating handle (9) which is rotatably connected to the communicating pipe(2), and the bottom of the rotating handle (9) is provided with a water control joint (10) located inside the communicating pipe(2).

3. The water exchanger according to claim 2, **characterized in that** the water control joint (10) is a single hole joint or a double hole joint.

4. The water exchanger according to claim 2, **characterized in that** the water control joint (10) comprises a water blocking end (11) and a water circulating end (12).

5. The water exchanger according to claim 1, **characterized in that**: the connecting pipe (3) is an expansion pipe, and a fixing nut (13) is threaded on the connecting pipe (3). The expansion and fixation of the connecting pipe (3) are achieved by turning the fixing nut (13).

6. The water exchanger according to claim 1, **characterized in that**: a fixing clip (14) is provided on the outer side of the communicating pipe(2), and a fastening bolt (15) is threaded on the fixing clip (14).

7. The water exchanger according to claim 1, **characterized in that**: the connecting pipe (3) is connected to the bottom of the communicating pipe(2) through a first one-way valve (16), and one side of the communicating pipe(2) is connected to the water outlet joint (5) through a second one-way valve (17).

8. The water exchanger according to claim 1, **characterized in that**: the pressing balloon (1) and the rotating handle (9), the rotating handle (9) and the communicating pipe(2), and the connecting pipe (3) and the communicating pipe(2) are all sealed by the sealing rings.
